# FASCICULE DE BREVET EUROPEEN

(11) **EP 3 201 048 B1**
(45) Date de publication et mention de la délivrance du brevet: **25.03.2026**
(21) Numéro de dépôt: 15763024.5
(22) Date de dépôt: 15.09.2015
(51) Int. Cl.: B60Q 1/26, B60Q 1/50, F21S 43/16, F21S 43/30

(54) **DISPOSITIF DE SIGNALISATION À AFFICHAGE DE PICTOGRAMMES POUR VÉHICULE AUTOMOBILE, ET FEU DE SIGNALISATION MUNI D'UN TEL DISPOSITIF LUMINEUX.**
SYMBOLANZEIGENDE SIGNALISIERUNGSVORRICHTUNG FÜR EIN KRAFTFAHRZEUG UND MIT SOLCH EINER BELEUCHTUNGSVORRICHTUNG AUSGESTATTETES SIGNALLICHT
SYMBOL-DISPLAYING SIGNALLING DEVICE FOR A MOTOR VEHICLE, AND SIGNAL LIGHT EQUIPPED WITH SUCH A LIGHTING DEVICE

(30) Priorité: 02.10.2014 FR 1459453
(43) Date de publication de la demande: 09.08.2017
(73) Titulaire: Valeo Vision, 93012 Bobigny Cedex (FR)
(72) Inventeur: ALBOU, Pierre, F-75013 Paris (FR); BOINET, Loic, F-76240 Le Mesnil Esnard (FR); SAGNA, Boubacar, 93012 - BOBIGNY CEDEX (FR); MOREL, Xavier, F-75015 Paris (FR); EL IDRISSI, Hafid, F-93500 Pantin (FR); SOMMERSCHUH, Stephan, F-75013 Paris (FR)
(74) Mandataire: Valeo Visibility
(86) Numéro de dépôt international: PCT/EP2015/071119
(87) Numéro de publication internationale: WO 2016/050503

(56) Documents cités:
- EP-A1- 2 503 222
- EP-A2- 1 433 655
- WO-A1-2009/095029
- DE-A1- 102011 076 330
- DE-A1- 102012 004 759
- GB-A- 2 405 755
- JP-A- S60 203 543
- KR-A- 20140 079 932
- US-A1- 2011 156 894

## Description

La présente invention concerne un dispositif de signalisation à affichage de pictogrammes pour véhicule automobile, et un feu de signalisation muni d'un tel dispositif de signalisation.

Les feux de signalisation de véhicule automobile, généralement situés à l'arrière du véhicule, sont des dispositifs lumineux qui comprennent une ou plusieurs sources de lumière et une glace qui ferme le feu. De façon simplifiée, la source lumineuse émet des rayons lumineux pour former un faisceau lumineux qui est dirigé vers la glace afin de produire une plage éclairante qui transmet la lumière à l'extérieur du véhicule. La couleur de la plage éclairante est caractéristique de la fonction ou du type de feu. Ainsi, on sait qu'une plage éclairante de couleur blanche indique que le feu est un feu de marche arrière, qu'une plage éclairante de couleur ambre est un indicateur de direction, et qu'une plage éclairante de couleur rouge est un feu de position arrière ou un feu stop, le feu stop étant d'une luminosité plus intense. Il existe aussi les feux rouges antibrouillard, dont l'intensité est encore plus forte pour être visible dans des conditions climatiques difficiles, telles que du brouillard, des fortes pluies ou des chutes de neige. En plus de la couleur, ces feux doivent répondre à des réglementations en matière d'intensité lumineuse et d'angles de visibilité notamment.

Cependant, bien que chaque feu ait une signification particulière règlementée, cela peut s'avérer insuffisamment explicite pour un observateur. Il est nécessaire de décoder la couleur et le type de feu qui est actionné pour essayer de comprendre l'intention du conducteur d'un véhicule ou par exemple la situation d'urgence qu'il rencontre. Ainsi, lorsque les véhicules sont en circulation, il n'est pas évident ou possible de comprendre précisément la situation rencontrée par un véhicule lorsqu'un de ses feux s'allume. En effet, même si le conducteur d'un véhicule suiveur observe l'allumage d'un feu stop sur un véhicule le devançant, le simple allumage du feu ne lui donne pas d'indication sur la cause exacte du freinage.

En outre, le nombre de feux différents étant limité à ceux évoqués précédemment, certaines situations sont difficilement descriptibles avec un nombre aussi restreint de messages. Dans beaucoup de situations, un véhicule ne peut pas avertir de façon plus précise les autres véhicules des évènements qui se produisent.

L'invention vise donc à obtenir un dispositif lumineux configuré pour renforcer la compréhension de certaines situations, d'avertir plus précisément des circonstances rencontrées par un véhicule, et qui augmente le type d'informations différentes qui servent à prévenir les autres véhicules. Les documents JPS60203543 et KR20140079932 décrivent des dispositifs de signalisation à affichage de pictogrammes et messages. Dans JPS60203543, l'afficheur est installé en sus des feux de signalisation classiques et peut s'activer simultanément ou indépendamment de ces feux, selon la situation de manœuvre du véhicule. Dans KR20140079932, l'afficheur est intégré dans un feu arrière, avec des modules lumineux additionnels situés sur tout ou partie de la périphérie de l'afficheur, qui ont pour fonction de mettre en valeur le message délivré par l'afficheur.

L'invention concerne donc un dispositif de signalisation à affichage de pictogrammes, pour véhicule automobile, le dispositif étant configuré pour réaliser au moins une fonction de signalisation d'un véhicule automobile.

Le dispositif selon l'invention est défini par les revendications. Il est remarquable en ce qu'il comprend des moyens d'affichage munis d'une zone d'affichage destinée à être disposée sur le véhicule, les moyens d'affichage étant aptes à afficher des pictogrammes sur la zone d'affichage, chaque pictogramme émettant un faisceau lumineux remplissant en partie les caractéristiques photométriques réglementaires d'une au moins de ladite au moins une fonction de signalisation. Le dispositif comprend également des moyens complémentaires de signalisation munis d'une zone complémentaire, les moyens complémentaires étant configurés pour émettre un faisceau lumineux complémentaire émis depuis la zone complémentaire, le cumul du faisceau lumineux du pictogramme et du faisceau lumineux complémentaire remplissant les caractéristiques réglementaires,

Ainsi, pour un certain nombre de situations rencontrées par un véhicule, un pictogramme spécifique peut être affiché afin d'en avertir précisément les autres véhicules. Le dispositif augmente ainsi le nombre de messages différents qui peut être observé et compris clairement par les autres usagers. De plus, comme tous les pictogrammes sont affichables sur une même zone d'affichage, on évite l'ajout de nouveaux feux particuliers.

En outre, le faisceau lumineux du pictogramme remplissant en partie les caractéristiques photométriques réglementaires, on n'augmente pas la consommation d'énergie nécessaire, c'est-à-dire la consommation des moyens d'affichage qui s'ajoute à la consommation normale du ou des feux. De plus, les pictogrammes n'engendrent pas, par conséquent, de faisceau parasite supplémentaire nuisible aux caractéristiques photométriques réglementaires du faisceau, et qui risquerait d'avoir pour conséquence l'interdiction de l'utilisation du dispositif de signalisation.

Selon différents modes de réalisation de l'invention, qui pourront être pris ensemble ou séparément :
- les moyens complémentaires comprennent une source de lumière apte à émettre des rayons lumineux et des moyens de distribution des rayons lumineux sur la zone complémentaire afin de former le faisceau lumineux complémentaire,
- la zone d'affichage et la zone complémentaire sont adjacentes,
- la zone complémentaire entoure au moins en partie la zone d'affichage,
- l'un au moins des pictogrammes se rapporte à des situations d'urgence,
- l'un au moins des pictogrammes se rapporte à des informations générales de circulation,
- les pictogrammes sont dynamiques,
- ledit dispositif comprend une unité de commande configurée pour commander automatiquement l'affichage des pictogrammes en fonction de paramètres du véhicule et/ou de la situation environnementale du véhicule,
- ledit dispositif comprend des capteurs disposés sur le véhicule, les capteurs étant configurés pour évaluer la situation environnementale du véhicule,
- les capteurs comprennent une caméra ;
- les capteurs sont agencés pour détecter un passage d'un objet ou personne extérieure dans un angle mort du véhicule
- l'un au moins des pictogrammes se rapporte à une information qui n'est pas issue de la caméra, par exemple une information de température ou de distance de sécurité ou d'intensité de freinage ;
- l'unité de commande comprend des commandes programmables configurées pour paramétrer l'affichage des pictogrammes,
- les moyens d'affichage sont adaptés pour afficher les pictogrammes avec différents niveaux d'intensité lumineuse ;
- les moyens d'affichage comprennent un écran de type cristaux liquides, plasma, à diodes électroluminescentes inorganiques ou organiques, la zone d'affichage étant celle de l'écran,
- les moyens d'affichage comprennent au moins une source laser apte à former un faisceau laser, une surface de transmission définissant la zone d'affichage, et des moyens de balayage configurés pour balayer la surface de transmission avec le faisceau laser,
- les moyens d'affichage comprennent une matrice de micro-miroirs couplée à au moins une diode électroluminescente ;
- les moyens d'affichage comprennent un guide de lumière surfacique comportant des groupes de structures de type prismes ou cavités sur une de ses faces latérales.

L'invention se rapporte également à un feu de signalisation comprenant un tel dispositif de signalisation à affichage de pictogrammes.

L'invention sera mieux comprise à la lumière de la description suivante qui n'est donnée qu'à titre indicatif et qui n'a pas pour but de la limiter, accompagnée des dessins joints :
- la figure 1 illustrant de façon schématique un véhicule muni de deux dispositifs de signalisation à affichage de pictogrammes selon un premier mode de réalisation qui ne fait pas partie de l'invention,
- la figure 2 illustrant de façon schématique un dispositif de signalisation à affichage de pictogrammes selon un deuxième mode de réalisation, conforme à l'invention,
- la figure 3 illustrant de façon schématique un dispositif de signalisation à affichage de pictogrammes selon une variante du deuxième mode de réalisation, conforme à l'invention,
- la figure 4 illustrant de façon schématique des exemples de pictogrammes,
- la figure 5 est un schéma synoptique illustrant un exemple de réalisation de l'invention,
- la figure 6 illustrant de façon schématique une vue en perspective d'un mode de réalisation des moyens d'affichage selon l'invention,
- la figure 7 illustrant de façon schématique une vue de dessus des moyens d'affichage de la figure 6,
- la figure 8 illustrant de façon schématique une vue de coté d'un autre mode de réalisation des moyens d'affichage selon l'invention.

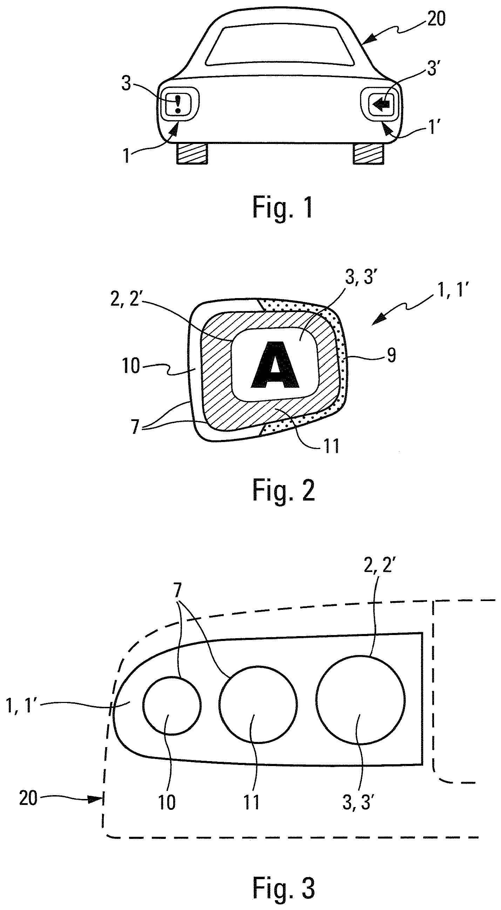

La figure 1 représente un véhicule 20 muni de deux dispositifs de signalisation 1, 1' à affichage de pictogrammes. Chaque dispositif de signalisation 1, 1'comprend un moyen d'affichage muni d'une zone d'affichage 3, 3' agencée à l'arrière du véhicule 20, sensiblement à l'endroit où est usuellement disposé un feu arrière de signalisation. Les moyens d'affichage ont pour fonction l'affichage de pictogrammes sur la zone d'affichage 3, 3', différents types de moyens d'affichage 2, 2' étant décrits plus loin.

Les caractéristiques photométriques réglementaires des feux de signalisation tels que les feux de position, d'indicateur de direction, de feu stop ou de brouillard sont bien définies. Elles concernent notamment les plages d'intensité lumineuse minimum et maximum à respecter, l'angle de visibilité du faisceau, la couleur du faisceau, la superficie de la surface lumineuse de la fonction, ou encore la distance minimale entre des fonctions différentes. Par exemple, un feu de brouillard doit être à 10 cm au moins du feu stop pour éviter de les confondre.

Dans un premier mode de réalisation non couvert par l'invention, représenté sur la figure 1, les moyens d'affichage 2, 2' sont configurés pour que le faisceau lumineux émis par un pictogramme remplisse à lui seul les caractéristiques photométriques réglementaires d'une fonction de signalisation définie. Dans ce mode de réalisation, chaque pictogramme affiché est paramétré pour émettre un faisceau lumineux qui réponde à toutes les exigences réglementaires mentionnées précédemment. Un seul pictogramme peut notamment remplir plusieurs fonctions simultanément ou alternativement, comme par exemple un clignotant et un feu de position. Plusieurs pictogrammes peuvent aussi être affichés simultanément ou alternativement, chaque pictogramme remplissant les caractéristiques photométriques d'une fonction différente du feu de signalisation.

De préférence et avantageusement, la fonction de signalisation réalisée avec le ou les pictogrammes est une fonction feu de position (ou lanterne) ou une fonction combinée lanterne et feu stop.

Dans un deuxième mode de réalisation conforme à l'invention, représenté sur les figure 2 et 3, le dispositif 1, 1' comprend des moyens complémentaires 7 de signalisation. Ces moyens complémentaires 7 sont prévus pour fournir un faisceau complémentaire qui s'ajoute au faisceau du pictogramme. Le cumul du faisceau complémentaire et du faisceau du pictogramme permet d'atteindre les caractéristiques photométriques réglementaires qui ne sont pas remplies en totalité par le faisceau du pictogramme seul. Les moyens complémentaires 7 sont munis d'au moins une zone complémentaire 10, 11, ici deux, aptes à transmettre chacune un faisceau lumineux complémentaire. Ainsi, grâce aux moyens complémentaires 7, le dispositif lumineux 1, 1' fournit un faisceau lumineux global qui remplit les caractéristiques photométriques réglementaires.

Les moyens complémentaires 7 sont, par exemple, des dispositifs lumineux utilisés pour des fonctions de feu de signalisation usuels, et qui sont indépendants des moyens d'affichage 2, 2'. Ils comprennent une source de lumière apte à émettre des rayons lumineux, par exemple une ou plusieurs diodes électroluminescentes, et des moyens de distribution des rayons lumineux sur la zone complémentaire 10, 11, la zone complémentaire 10, 11 transmettant les rayons lumineux en formant le faisceau complémentaire. Les moyens de distribution peuvent être un guide de lumière ou un réflecteur.

Dans ce mode de réalisation, un pictogramme affiché fournit un faisceau lumineux qui a ses caractéristiques propres eu égard à la forme et au type de pictogramme. Ainsi, par exemple l'angle de visibilité ou la superficie de la surface lumineuse sont différents d'un pictogramme à l'autre. En revanche, la couleur est choisie de manière à correspondre à la fonction correspondante. Les moyens complémentaires 7 sont donc configurés pour compenser pour chaque pictogramme les différences par rapport aux caractéristiques photométriques réglementaires. Lorsqu'un pictogramme apparaît ou qu'il change de forme, les moyens complémentaires 7 fournissent de façon sensiblement simultanée, le faisceau complémentaire adéquat, par exemple pour élargir l'angle de visibilité et/ou la superficie lumineuse du faisceau global.

Comme illustré sur le mode de réalisation de la figure 2, le dispositif 1, 1' peut comprendre plusieurs moyens complémentaires 7, ici deux, un par fonction. Les deux zones complémentaires 10,11 sont agencées au moins en partie autour de la zone d'affichage 3, 3' du pictogramme. Une première zone complémentaire 11 adjacente entoure la zone d'affichage 3, 3', et sert de complément à la fonction de feu de position - éventuellement combinée à une fonction stop. Une deuxième zone complémentaire 10 entoure en partie la première zone complémentaire 11 et sert complément à la fonction d'indicateur de direction (clignotant). En outre, un catadioptre 9 parachève le tour de la première zone complémentaire 11.

Dans l'exemple illustré, si l'on choisit que la zone d'affichage 3,3' ne réalise qu'une fonction feu de position ou une fonction combinée feu de position /feu stop, alors la deuxième zone complémentaire 10 assurera seule la fonction d'indicateur de direction.

Grâce aux moyens complémentaires 7, on s'assure que quel que soit le pictogramme affiché, le faisceau lumineux global émis par le dispositif 1, 1' est règlementaire. En outre, la ou les zones complémentaires 10, 11 adjacentes réduisent l'ajustement nécessaire de l'intensité du faisceau du pictogramme pour remplir les caractéristiques réglementaires de la fonction du feu. De manière avantageuse, sensiblement tous les pictogrammes émettent un faisceau lumineux avec la même intensité, les moyens complémentaires 7 étant configurés pour émettre un faisceau complémentaire permettant d'ajuster l'intensité globale à chaque fonction. Autrement dit, les moyens complémentaires 7 ajustent le faisceau complémentaire à chaque pictogramme affiché.

Dans une variante du deuxième mode de réalisation illustré sur la figure 3, les zones complémentaires 10, 11, ainsi que la zone d'affichage 3, 3' sont disjointes. Le dispositif 1, 1' agencé sur le véhicule comprend trois zones 3, 3', 10, 11 sensiblement circulaires qui sont côtes à côtes. La première zone complémentaire 11 de la fonction du feu de position est par exemple au centre. La deuxième zone complémentaire 10 correspondant à la fonction d'indicateur de direction, est du côté orienté vers l'extérieur du véhicule. Enfin, la zone d'affichage 3, 3' est du côté orienté vers le milieu du véhicule.

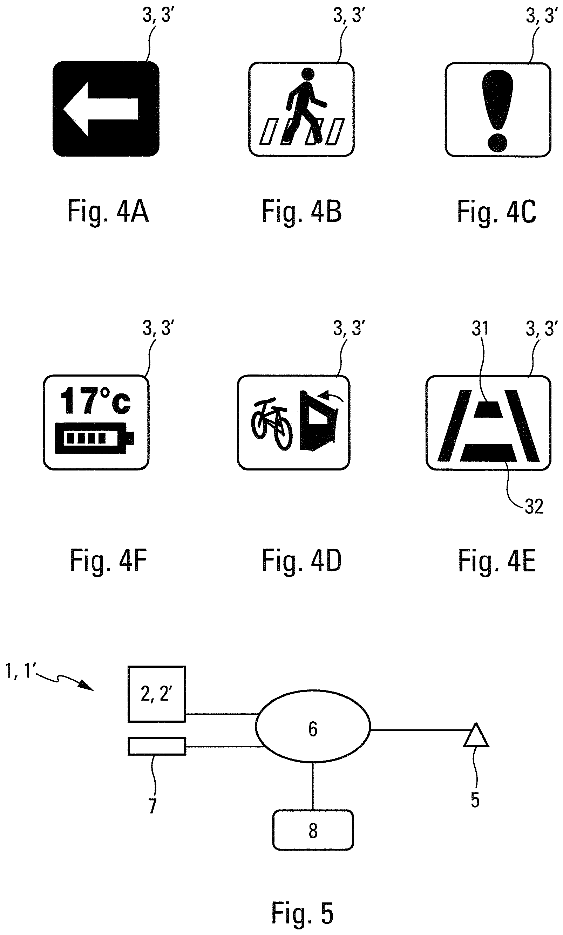

La figure 4 montre quelques exemples de pictogrammes affichés sur la zone d'affichage 3, 3', et dont on distingue, par exemple, deux types.

Certains pictogrammes alertent sur une situation d'urgence ou de danger, par exemple une flèche directionnelle 4A, un piéton traversant devant le véhicule 4B, un point d'exclamation avertissant d'un danger 4C, un avertissement d'ouverture de porte 4D, ou encore une alerte de respect de la distance de sécurité 4E.

D'autres pictogrammes donnent une information générale, par exemple que le chauffeur du véhicule est un apprenti en affichant la lettre A ou L, comme illustré sur le pictogramme de la figure 2. Le logo du constructeur du véhicule peut aussi être affiché par défaut lorsque la fonction de signalisation est activée ou seulement lors de l'ouverture à distance du véhicule (fonction d'accueil du chauffeur, dite « coming home »). D'ailleurs, dans le cadre d'un scénario d'accueil du chauffeur, on pourra utiliser le dispositif de l'invention pour réaliser un affichage d'informations sur l'état du véhicule, telles que la température intérieure, le niveau de remplissage du réservoir ou de charge de la batterie, comme illustré à la figure 4F.

Certains pictogrammes peuvent être à affichage dynamique, en jouant sur leur taille, leur déplacement et leur clignotement. Par exemple le pictogramme concernant la distance de sécurité 4E, pour lequel la taille et la distance entre les pavés 31 et 32 qui représentent les véhicules, pourra évoluer dynamiquement en temps réel en fonction de la distance effective entre les véhicules.

Un exemple de mode de réalisation du dispositif de signalisation 1, 1' et de son fonctionnement, est illustré sur la figure 5. En plus des moyens d'affichage 2, 2', le dispositif 1, 1' comprend ici une unité de commande 6 et des capteurs 5 disposés sur le véhicule. Les capteurs 5 sont configurés pour détecter ou calculer certains paramètres permettant d'évaluer la situation environnementale du véhicule. Les paramètres sont par exemple ceux concernant le véhicule, tels que la vitesse, l'accélération ou le freinage, et qui sont mesurés par exemple par des capteurs ultrasons. Les capteurs peuvent aussi être des capteurs d'environnement (caméras, GPS, etc.) pour observer l'environnement de la voiture. Tous ces capteurs 5 sont reliés à l'unité de commande 6 pour lui fournir ces paramètres.

L'unité de commande 6 est configurée pour commander automatiquement l'affichage des pictogrammes en fonction des paramètres du véhicule et/ou de la situation environnementale du véhicule. A cette fin, elle transmet les commandes aux moyens d'affichage 2, 2'. L'unité de commande 6 détermine le pictogramme à afficher en fonction de la situation. Elle peut également faire évoluer dynamiquement le dessin du pictogramme en fonctions de ces paramètres, par exemple dans le cas de la distance de sécurité. La taille du pictogramme peut par exemple être adaptée en fonction de la distance du véhicule suiveur, afin d'améliorer la distance de visibilité.

Dans le mode de réalisation correspondant, l'unité de commande 6 envoie également des commandes aux moyens complémentaires 7 pour les coordonner avec les moyens d'affichage 2, 2' du pictogramme. Ainsi, le faisceau du pictogramme et le faisceau complémentaire sont coordonnés pour remplir les caractéristiques photométriques réglementaires.

En outre, l'unité de commande 6 comprend des commandes programmables configurées pour paramétrer l'affichage des pictogrammes, et qui sont accessibles, par exemple à travers une interface 8 disposées dans l'habitacle du véhicule. Ainsi, pour afficher que le conducteur est un apprenti, il faut une action commandée effectuée par le conducteur sur cette interface 8.

Dans le cas d'une paire de dispositifs de signalisation 1, 1', chaque moyen d'affichage 2, 2' peut être commandé indépendamment l'un de l'autre par l'unité de commande 6. L'unité de commande 6 peut aussi générer des combinaisons de pictogrammes différents à chaque moyen d'affichage 2, 2' afin de donner une information complète aux véhicules suiveurs. Par exemple, une information concerne une situation de danger qui est affichée sur une zone d'affichage 3 du premier dispositif 1, l'autre concernant la direction, et qui est affichée sur une zone d'affichage 3' du deuxième dispositif 1', comme illustré sur la figure 1.

Selon un premier mode de réalisation des moyens d'affichage, non représenté sur les figures, chaque moyen d'affichage est un écran de type cristaux liquides, plasma ou à diodes électroluminescentes, la zone d'affichage du dispositif étant celle de l'écran.

Selon un deuxième mode de réalisation des moyens d'affichage, non représenté sur les figures, les moyens d'affichage comprennent un guide de lumière surfacique comportant des groupes de structures de type prismes ou cavités sur une de ses faces latérales. Les structures sont conçues pour renvoyer vers une face opposée de la lumière injectée sélectivement par l'une des tranches. On a ainsi un écran avec des zones illuminées sélectivement par les tranches. Ce type d'affichage est décrit par exemple dans les documents FR2994248 et US2013314944.

Selon une variante préférée de réalisation de l'invention, les pictogrammes sont générés sur une surface de transmission qui défini la surface d'affichage au moyen d'un faisceau lumineux totalement paramétrable et configurable.

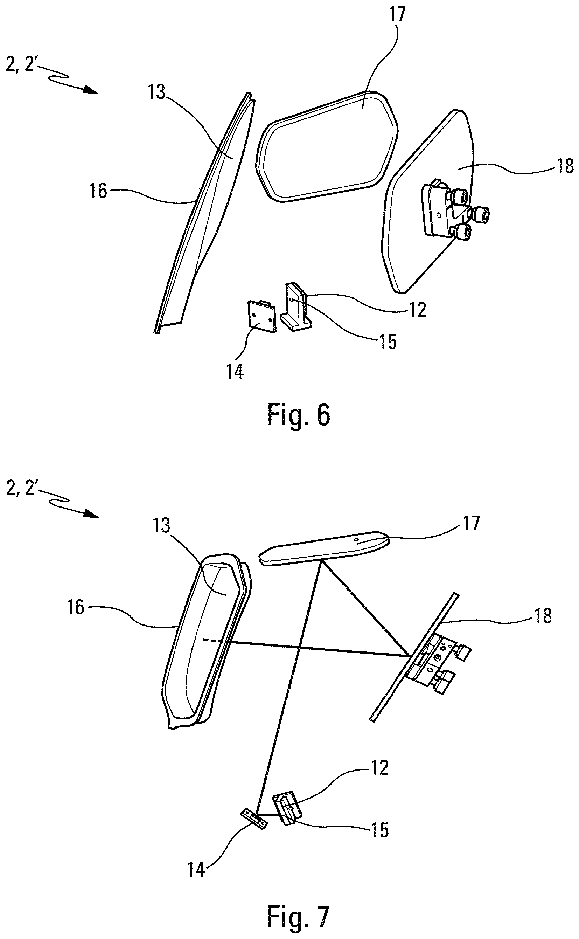

Ainsi, selon un troisième mode de réalisation des moyens d'affichage 2, 2', représenté sur les figures 6 et 7, les moyens d'affichage 2, 2' comprennent au moins une source laser 12 apte à former un faisceau laser, une surface de transmission 13 définissant la zone d'affichage 3, et des moyens de balayage 14 configurés pour balayer la surface de transmission 13 avec le faisceau laser. La surface de transmission 13 est par exemple agencée sur la glace référencée 16 de fermeture du feu. Le faisceau laser qui est issu de la source laser 12 est destiné à venir éclairer la surface de transmission 13.

La source laser 12 comprend par exemple une diode laser, émettant un rayonnement dont la longueur d'onde est choisie pour obtenir la couleur correspondant à la fonction du feu sur la glace 6. Alternativement, on dispose un dispositif de conversion de longueur d'onde, par exemple une plaque phosphore, sur le trajet du faisceau laser, pour transformer la longueur d'onde du rayonnement laser et obtenir ainsi la couleur souhaitée. La source laser 12 peut aussi comprendre un dispositif optique combinant en un seul faisceau plusieurs rayonnements lasers, par exemple à l'aide de fibres optiques ou de dispositifs tirant profit des polarisations différentes de différentes sources laser.

Les moyens d'affichage 2, 2' sont pourvus d'un système optique 15 configuré pour collimater le faisceau laser provenant de la source laser 12. Le système optique 15 est par exemple une lentille unique de collimation.

Selon la source laser 12 et le système optique 15 choisis, le faisceau laser peut projeter sur la face de transmission 13 une trace lumineuse qui a une forme de point, de tache plus large, voire une marque oblongue. Le balayage de la trace lumineuse est accompli par les moyens de balayage 14 à une vitesse suffisamment grande pour que l'œil humain ne perçoive pas son déplacement sur la surface de transmission 13.

Le faisceau laser provenant de la source laser 12 est, avant de frapper la surface de transmission 13, de préférence renvoyé par les moyens de balayage 14 sur un premier miroir 17 qui le réfléchit vers un deuxième miroir 18. Le deuxième miroir 18 réfléchit à son tour le faisceau laser vers la surface de transmission 13 de la glace 16 du feu. Les deux miroirs 17, 18 servent à replier le chemin optique du faisceau laser pour obtenir un feu compact tout en permettant au faisceau laser de balayer la surface de transmission 13 avec une incidence proche de la normale. La figure 7 représente les moyens d'affichage 2, 2' avec le trajet du faisceau laser depuis la source de lumière 12 jusqu'à la glace 16.

Ici, les moyens de balayage 14 sont un micro-miroir mobile, permettant de balayer la surface de transmission 13 par réflexion du faisceau laser selon une première direction de la surface de transmission 13, qui est par exemple horizontale. Le micro-miroir est animé d'un mouvement périodique produit par un actionneur (non représenté). Le mouvement du micro-miroir est opéré autour d'un axe de rotation orthogonal à la première direction afin que la trace lumineuse du faisceau laser balaye la surface de transmission 13 selon ladite première direction.

Le micro-miroir est également configuré pour balayer la surface de transmission 13 avec le faisceau laser selon une deuxième direction sensiblement perpendiculaire à la première direction afin de produire un mouvement du faisceau qui se déplace aisément sur la surface de transmission 13. Autrement dit, c'est le même micro-miroir qui balaye la surface de transmission 13 avec le faisceau laser selon les deux directions. Le micro-miroir suit donc un autre mouvement, par exemple de rotation autour d'un deuxième axe de rotation perpendiculaire au précédent. Ainsi, le micro-miroir permet à la trace lumineuse du faisceau laser de balayer à la fois horizontalement et verticalement la surface de transmission 13.

Une variante de ce troisième mode de réalisation, non représentée sur les figures, consiste à utiliser un deuxième micro-miroir pour faire balayer le faisceau laser selon la deuxième direction. Dans ce cas, les moyens de balayage sont munis de deux micro-miroirs disposés l'un à la suite de l'autre sur le chemin optique du faisceau, chacun ayant pour fonction de faire balayer au faisceau laser la surface de transmission selon une des deux directions.

Dans la description, les micro-miroirs mentionnés comme moyen de balayage sont par exemple de type MEMS (pour « Micro-Electro-Mechanical Systems » en anglais ou microsystème électromécanique). Cependant, l'invention n'est nullement limitée à ce moyen de balayage et peut utiliser d'autres sortes de moyens de balayage, telle une série de miroirs agencés sur un élément rotatif, la rotation de l'élément engendrant un balayage de la surface de transmission par le faisceau laser.

Le balayage du faisceau laser par les moyens de balayage 14 permet de faire apparaître des pictogrammes sur la surface de transmission 13, les moyens de balayage 14 étant commandés par exemple par l'unité de commande.

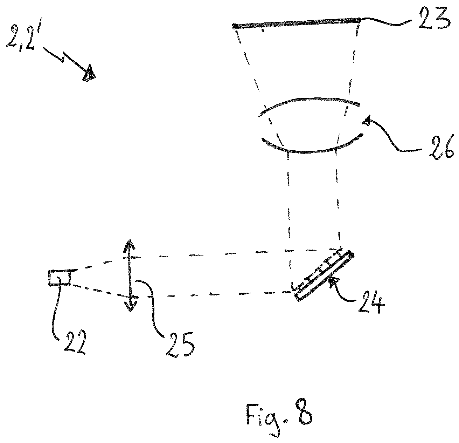

Selon un quatrième mode de réalisation particulièrement préféré des moyens d'affichage 2, 2', représenté sur la figure 8, les moyens d'affichage 2, 2' comprennent au moins une source de lumière 22 formée d'au moins une diode électroluminescente, une surface de transmission 23 définissant la zone d'affichage 3, et une matrice de micro-miroirs 24 configurés pour réfléchir les rayons lumineux issus de la au moins une source de lumière vers la surface de transmission 23. La surface de transmission 23 est par exemple agencée sur la glace référencée de fermeture du feu ou bien est formée par un écran translucide placé derrière cette glace de fermeture. Le faisceau lumineux qui est issu de la source de lumière 22 est destiné à venir éclairer la surface de transmission 23.

Plus précisément, ce mode de réalisation comprend des moyens de collimation 25 formés par au moins une lentille optique, afin de collimater les rayons issus de la au moins une source lumineuse 22 sur la matrice de micro-miroirs 24 ainsi qu'un système optique de focalisation 26 des rayons réfléchis par la matrice de micro-miroirs 24 vers la surface de transmission 23, afin que le faisceau émis formant le pictogramme soit bien focalisé sur la surface de transmission, afin que le pictogramme apparaisse bien défini et net.

La ou les sources de lumière 22 sont formées d'au moins une diode électroluminescente. Avantageusement, il s'agit d'un ensemble de sources de lumière, ensemble du type diode électroluminescente multipuces, c'est-à-dire d'un composant électronique unique comportant plusieurs émetteurs électroluminescents.

Selon une caractéristique, la lumière émise par ces diodes électroluminescentes est rouge, ambre ou blanche.

Avantageusement, la surface de transmission est translucide et neutre en couleur ; la couleur du pictogramme affichée sera alors fonction de la couleur de la source lumineuse activée selon le type de fonction règlementaire réalisée.

Dans ce dernier mode de réalisation, les moyens d'affichage 2,2' comprennent une matrice de micro-miroirs 24 (également connue sous l'acronyme DMD, pour l'anglais Digital Micromirror Device) qui dirige les rayons lumineux par réflexion. Les rayons lumineux sont réfléchis dans deux directions possibles : soit vers le système optique de focalisation, soit dans une direction différente du système optique de focalisation.

A cette fin, chaque micro miroir peut pivoter entre deux positions fixes, une première position dans laquelle les rayons lumineux sont réfléchis vers le système optique de focalisation, et une deuxième position dans laquelle les rayons lumineux sont réfléchis dans une direction différente du système optique de focalisation. Les deux positions fixes sont orientées de la même manière pour tous les micro-miroirs et forment par rapport à un plan de référence support de la matrice de micro miroirs un angle α caractéristique de la matrice de micro-miroirs, défini dans ses spécifications. Cet angle α est généralement inférieur à 20° et vaut usuellement environ 12°.

Ainsi, chaque micro-miroir réfléchissant une petite partie des rayons lumineux incidents sur la matrice, l'actionnement du changement de position permet de modifier la forme du faisceau émis par le système optique de focalisation et *in fine* sur la surface de transmission 23. Les rayons lumineux renvoyés par les micro-miroirs vers le système optique de focalisation participent au pictogramme affiché par les moyens d'affichage. Et les rayons lumineux renvoyés par les micro-miroirs dans une direction différente ne participent pas au pictogramme.

Ce quatrième mode de réalisation est particulièrement préféré aux autres modes de réalisation et en particulier au troisième mode. En effet, ce troisième mode impliquant une source de lumière collimatée de forte luminance, notamment une source laser couplée à des moyens de balayage présente de nombreux inconvénients : tout d'abord, si le balayage est arrêté, il y a un risque oculaire du fait de la forte luminance ; ensuite, l'utilisation d'une source laser implique une diffraction du faisceau sur la surface de transmission d'où des raies parasites et des pictogrammes qui apparaissent floutés ou dupliqués ; en fin, le composant MEMS présente des problèmes de stabilité, son comportement étant perturbé par le rayonnement reçu de la source de lumière de forte luminance, ce qui génère un affichage non stable, avec un pictogramme qui bouge ou oscille.

Le quatrième mode de réalisation répond à ces inconvénients en offrant un dispositif dont l'affichage des pictogrammes est plus stable et ne nécessitant pas de source de forte luminance pour atteindre les performances règlementaires requises, notamment pour une fonction de feu de stop ou de feu de signalisation arrière (lanterne), résolvant du coup les problèmes de sécurité inhérent à l'utilisation de sources collimatées de forte luminance du type source laser.

## Revendications

1. Dispositif de signalisation (1, 1') à affichage de pictogrammes, pour véhicule automobile (20), le dispositif (1, 1') étant configuré pour réaliser au moins une fonction de signalisation d'un véhicule automobile (20), le dispositif (1, 1') étant **caractérisé en ce qu'**il comprend des moyens d'affichage (2, 2') munis d'une zone d'affichage (3, 3') destinée à être disposée sur le véhicule (20) , des moyens complémentaires (7) de signalisation munis d'une zone complémentaire (10, 11) et une unité de commande (6), les moyens d'affichage (2, 2') étant aptes à afficher des pictogrammes sur la zone d'affichage (3, 3') selon les commandes transmises par l'unité de commande (6), chaque pictogramme émettant un faisceau lumineux remplissant en partie les caractéristiques photométriques réglementaires d'une au moins de ladite au moins une fonction de signalisation, les moyens complémentaires (7) étant configurés pour émettre selon les commandes transmises par l'unité de commande (6) un faisceau lumineux complémentaire émis depuis la zone complémentaire (10, 11) qui vient compenser pour chaque pictogramme les différences d'intensité lumineuse, d'angle de visibilité et/ou de surface lumineuse par rapport aux caractéristiques photométriques réglementaires, le cumul du faisceau lumineux du pictogramme et du faisceau lumineux complémentaire permettant d'atteindre les caractéristiques réglementaires .

2. Dispositif selon la revendication 1, **caractérisé en ce que** les moyens complémentaires (7) comprennent une source de lumière apte à émettre des rayons lumineux et des moyens de distribution des rayons lumineux sur la zone complémentaire afin de former le faisceau lumineux complémentaire.

3. Dispositif selon l'une quelconque des revendications 1 à 2, **caractérisé en ce que** la zone d'affichage (3, 3') et la zone complémentaire (10, 11) sont adjacentes.

4. Dispositif selon la revendication 3, **caractérisé en ce que** la zone complémentaire (10, 11) entoure au moins en partie la zone d'affichage.

5. Dispositif selon l'une quelconque des revendications précédentes, **caractérisé en ce que** l'un au moins des pictogrammes se rapporte à des situations d'urgence.

6. Dispositif selon l'une quelconque des revendications précédentes, **caractérisé en ce que** l'un au moins des pictogrammes se rapporte à des informations générales de circulation.

7. Dispositif selon l'une quelconque des revendications précédentes, **caractérisé en ce que** les pictogrammes sont dynamiques.

8. Dispositif selon l'une quelconque des revendications précédentes, **caractérisé en ce que** l'unité de commande (6) est configurée pour commander automatiquement l'affichage des pictogrammes en fonction de paramètres du véhicule (20) et/ou de la situation environnementale du véhicule (20).

9. Dispositif selon la revendication 8, **caractérisé en ce qu'**il comprend des capteurs (5), les capteurs (5) étant configurés pour être disposés sur le véhicule (20) et évaluer la situation environnementale du véhicule (20).

10. Dispositif selon la revendication 8 ou 9, **caractérisé en ce que** l'unité de commande (6) comprend des commandes programmables (8) configurées pour paramétrer l'affichage des pictogrammes.

11. Dispositif selon l'une quelconque des revendications précédentes, **caractérisé en ce que** les moyens d'affichage (2, 2') comprennent un écran de type cristaux liquides, plasma, à diodes électroluminescentes inorganiques ou organiques, la zone d'affichage (3, 3') étant celle de l'écran.

12. Dispositif selon l'une quelconque des revendications 1 à 10, **caractérisé en ce que** les moyens d'affichage (2, 2') comprennent au moins une source laser (12) apte à former un faisceau laser, une surface de transmission (13) définissant la zone d'affichage (3, 3'), et des moyens de balayage (14) configurés pour balayer la surface de transmission (13) avec le faisceau laser.

13. Dispositif selon l'une quelconque des revendications 1 à 10, **caractérisé en ce que** les moyens d'affichage (2, 2') comprennent un guide de lumière surfacique comportant des groupes de structures de type prismes ou cavités sur une de ses faces latérales.

14. Dispositif selon l'une quelconque des revendications 1 à 10, **caractérisé en ce que** les moyens d'affichage (2, 2') comprennent au moins une source de lumière (22) formée d'au moins une diode électroluminescente, une surface de transmission (23) définissant la zone d'affichage (3), et une matrice de micro-miroirs (24) configurés pour réfléchir les rayons lumineux issus de la au moins une source de lumière (22) vers la surface de transmission (23).

15. Feu de signalisation de véhicule automobile comprenant un dispositif lumineux (1, 1') à affichage de pictogrammes selon l'une quelconque des revendications précédentes.

## Patentansprüche

1. Signalvorrichtung (1, 1') mit Piktogrammanzeige für Kraftfahrzeuge (20), wobei die Vorrichtung (1, 1') konfiguriert ist, um mindestens eine Signalfunktion eines Kraftfahrzeugs (20) zu realisieren, wobei die Vorrichtung (1, 1') **dadurch gekennzeichnet ist, dass** sie Anzeigemittel (2, 2') mit einem Anzeigebereich (3, 3'), der dazu bestimmt ist, am Fahrzeug (20) angeordnet zu werden, ergänzende Signalmittel (7) mit einem ergänzenden Bereich (10, 11) und eine Steuereinheit (6) umfasst, wobei die Anzeigemittel (2, 2') geeignet sind, Piktogramme auf dem Anzeigebereich (3, 3') gemäß den von der Steuereinheit (6) übermittelten Befehlen anzuzeigen, wobei jedes Piktogramm einen Lichtstrahl aussendet, der teilweise die vorschriftsmäßigen photometrischen Eigenschaften mindestens einer der mindestens einen Signalfunktion erfüllt, wobei die ergänzenden Mittel (7) konfiguriert sind, gemäß den von der Steuereinheit (6) übermittelten Befehlen einen ergänzenden Lichtstrahl auszusenden, der vom ergänzenden Bereich (10, 11) ausgeht und für jedes Piktogramm die Unterschiede in Lichtintensität, Sichtwinkel und/oder Lichtfläche im Vergleich zu den vorschriftsmäßigen photometrischen Eigenschaften ausgleicht, wobei die Kombination des Lichtstrahls des Piktogramms und des ergänzenden Lichtstrahls es ermöglicht, die vorschriftsmäßigen Eigenschaften zu erreichen.

2. Vorrichtung nach Anspruch 1, **dadurch gekennzeichnet, dass** die ergänzenden Mittel (7) eine Lichtquelle umfassen, die geeignet ist, Lichtstrahlen auszusenden, und Mittel zur Verteilung der Lichtstrahlen auf den ergänzenden Bereich, um den ergänzenden Lichtstrahl zu bilden.

3. Vorrichtung nach einem der Ansprüche 1 bis 2, **dadurch gekennzeichnet, dass** der Anzeigebereich (3, 3') und der ergänzende Bereich (10, 11) aneinander angrenzen.

4. Vorrichtung nach Anspruch 3, **dadurch gekennzeichnet, dass** der ergänzende Bereich (10, 11) den Anzeigebereich zumindest teilweise umgibt.

5. Vorrichtung nach einem der vorhergehenden Ansprüche, **dadurch gekennzeichnet, dass** sich mindestens eines der Piktogramme auf Notfallsituationen bezieht.

6. Vorrichtung nach einem der vorhergehenden Ansprüche, **dadurch gekennzeichnet, dass** sich mindestens eines der Piktogramme auf allgemeine Verkehrsinformationen bezieht.

7. Vorrichtung nach einem der vorhergehenden Ansprüche, **dadurch gekennzeichnet, dass** die Piktogramme dynamisch sind.

8. Vorrichtung nach einem der vorhergehenden Ansprüche, **dadurch gekennzeichnet, dass** die Steuereinheit (6) konfiguriert ist, um die Anzeige der Piktogramme automatisch in Abhängigkeit von Parametern des Fahrzeugs (20) und/oder der Umgebungssituation des Fahrzeugs (20) zu steuern.

9. Vorrichtung nach Anspruch 8, **dadurch gekennzeichnet, dass** sie Sensoren (5) umfasst, wobei die Sensoren (5) konfiguriert sind, um am Fahrzeug (20) angeordnet zu werden und die Umgebungssituation des Fahrzeugs (20) zu bewerten.

10. Vorrichtung nach Anspruch 8 oder 9, **dadurch gekennzeichnet, dass** die Steuereinheit (6) programmierbare Steuerungen (8) umfasst, die konfiguriert sind, um die Anzeige der Piktogramme zu parametrieren.

11. Vorrichtung nach einem der vorhergehenden Ansprüche, **dadurch gekennzeichnet, dass** die Anzeigemittel (2, 2') einen Bildschirm vom Typ Flüssigkristall, Plasma, anorganische oder organische Leuchtdioden umfassen, wobei der Anzeigebereich (3, 3') der des Bildschirms ist.

12. Vorrichtung nach einem der Ansprüche 1 bis 10, **dadurch gekennzeichnet, dass** die Anzeigemittel (2, 2') mindestens eine Laserquelle (12), die geeignet ist, einen Laserstrahl zu bilden, eine Übertragungsfläche (13), die den Anzeigebereich (3, 3') definiert, und Abtastmittel (14) umfassen, die konfiguriert sind, um die Übertragungsfläche (13) mit dem Laserstrahl abzutasten.

13. Vorrichtung nach einem der Ansprüche 1 bis 10, **dadurch gekennzeichnet, dass** die Anzeigemittel (2, 2') einen flächigen Lichtleiter umfassen, der Gruppen von prismenartigen Strukturen oder Hohlräumen auf einer seiner Seitenflächen aufweist.

14. Vorrichtung nach einem der Ansprüche 1 bis 10, **dadurch gekennzeichnet, dass** die Anzeigemittel (2, 2') mindestens eine Lichtquelle (22), die aus mindestens einer Leuchtdiode besteht, eine Übertragungsfläche (23), die den Anzeigebereich (3) definiert, und eine Matrix von Mikrospiegeln (24) umfassen, die konfiguriert sind, um die von der mindestens einen Lichtquelle (22) ausgehenden Lichtstrahlen zur Übertragungsfläche (23) zu reflektieren.

15. Signalleuchte für Kraftfahrzeuge, umfassend eine Lichtvorrichtung (1, 1') mit Piktogrammanzeige nach einem der vorhergehenden Ansprüche.

## Claims

1. Signaling device (1, 1') with pictogram display, for motor vehicle (20), the device (1, 1') being configured to perform at least one signaling function of a motor vehicle (20), the device (1, 1') being **characterized in that** it comprises display means (2, 2') equipped with a display area (3, 3') intended to be arranged on the vehicle (20), complementary signaling means (7) equipped with a complementary area (10, 11) and a control unit (6), the display means (2, 2') being capable of displaying pictograms on the display area (3, 3') according to commands transmitted by the control unit (6), each pictogram emitting a light beam partially fulfilling the regulatory photometric characteristics of at least one of said at least one signaling function, the complementary means (7) being configured to emit according to commands transmitted by the control unit (6) a complementary light beam emitted from the complementary area (10, 11) which compensates for each pictogram the differences in light intensity, viewing angle and/or luminous surface compared to the regulatory photometric characteristics, the combination of the light beam of the pictogram and the complementary light beam allowing to achieve the regulatory characteristics.

2. Device according to claim 1, **characterized in that** the complementary means (7) comprise a light source capable of emitting light rays and means for distributing the light rays on the complementary area to form the complementary light beam.

3. Device according to any one of claims 1 to 2, **characterized in that** the display area (3, 3') and the complementary area (10, 11) are adjacent.

4. Device according to claim 3, **characterized in that** the complementary area (10, 11) surrounds at least partially the display area.

5. Device according to any one of the preceding claims, **characterized in that** at least one of the pictograms relates to emergency situations.

6. Device according to any one of the preceding claims, **characterized in that** at least one of the pictograms relates to general traffic information.

7. Device according to any one of the preceding claims, **characterized in that** the pictograms are dynamic.

8. Device according to any one of the preceding claims, **characterized in that** the control unit (6) is configured to automatically control the display of pictograms according to parameters of the vehicle (20) and/or the environmental situation of the vehicle (20).

9. Device according to claim 8, **characterized in that** it comprises sensors (5), the sensors (5) being configured to be arranged on the vehicle (20) and evaluate the environmental situation of the vehicle (20).

10. Device according to claim 8 or 9, **characterized in that** the control unit (6) comprises programmable controls (8) configured to parameterize the display of pictograms.

11. Device according to any one of the preceding claims, **characterized in that** the display means (2, 2') comprise a screen of liquid crystal, plasma, inorganic or organic light-emitting diode type, the display area (3, 3') being that of the screen.

12. Device according to any one of claims 1 to 10, **characterized in that** the display means (2, 2') comprise at least one laser source (12) capable of forming a laser beam, a transmission surface (13) defining the display area (3, 3'), and scanning means (14) configured to scan the transmission surface (13) with the laser beam.

13. Device according to any one of claims 1 to 10, **characterized in that** the display means (2, 2') comprise a surface light guide having groups of prism-type structures or cavities on one of its lateral faces.

14. Device according to any one of claims 1 to 10, **characterized in that** the display means (2, 2') comprise at least one light source (22) formed of at least one light-emitting diode, a transmission surface (23) defining the display area (3), and a matrix of micro-mirrors (24) configured to reflect the light rays from the at least one light source (22) towards the transmission surface (23).

15. Motor vehicle signaling light comprising a luminous device (1, 1') with pictogram display according to any one of the preceding claims.
